# EUROPEAN PATENT APPLICATION

(11) **EP 3 437 780 A1**
(43) Date of publication of application: **06.02.2019**
(21) Application number: 17184785.8
(22) Date of filing: 03.08.2017
(51) Int. Cl.: B23K 9/20

(54) **HOLDING DEVICE, JOINING HEAD, JOINING SYSTEM AND METHOD FOR FEEDING STUDS**

(71) Applicant: Newfrey LLC, New Britain, CT 06053 (US)
(72) Inventor: Werner, Wolfgang, 35394 Gießen (DE)
(74) Representative: SBD IPAdmin

(57) **Abstract**

Holding device (14) for holding a stud (30) having a radially projecting flange (36) and a shank (34) in a securing position, comprising a collet component (42) including an insertion section (48) and a clamping section (50), a securing device (44) arranged on the insertion section (48) with a plurality of separate securing-sleeve sections, which are elastically radially movable relative to one another, and a clearance space (46) defined between a bottom end (58) and a top end of the clamping section (50), the clearance space being operable for releasably holding the flange of the stud in the securing position. The securing device (44) is a one-part unit and the securing-sleeve sections (68) comprises a shank clamping portion adapted to support the shank of the stud, the shank clamping portion being provided in the vicinity of the bottom end and having a reduced cross section, such that the shank of the stud is hold in an axially centered position.

## Description

The present invention relates to holding devices for holding a stud, comprising a radially projecting flange and a shank, in a securing position. Such holding devices comprise a collet component including a hollow tubular insertion section, a securing device arranged on the insertion section and comprising a securing sleeve located coaxial with and radially inside the insertion section, the securing sleeve comprising a plurality of separate securing-sleeve sections, which are elastically radially movable relative to one another, and a clearance space defined between a bottom end of the securing-sleeve sections and a top end of the clamping section, and the clearance space is operable for releasably holding the flange of the stud in the securing position.

The present invention also relates to a joining head for joining studs to workpieces, comprising such a holding device, to a joining system and to a method of feeding a stud to a joining head.

In the field of joining technology, it is known to join studs to the surface of a workpiece. This includes "stud welding", in which a stud is welded to the surface of a workpiece. Alternative joining techniques include, for example, the adhesive bonding or the gluing of a stud to the surface of a workpiece.

Such joining processes are usually carried out in an automated manner, for example in the motor vehicle industry, where a multiplicity of studs are joined to the vehicle body (or to vehicle sheets) in order to provide anchors for fastening means, paneling, etc. The automated joining of studs to workpieces usually includes the provision of a joining head on a robot. The joining head is in this case connected to a supply unit which provides, for example, the electric welding current and other control signals. Furthermore, it is preferred to feed the studs to the joining head in an automated manner. This is for example achieved by compressed air through feed tubes. It might be appropriate to feed the studs from the rear into a holding device of the joining head. The holding device is used to first hold the stud in a securing position before being shift into a defined ready position, in which a joining process can be initiated.

The diameter of the feed passages is usually slightly larger than the diameter of the flange section of the stud in order to make it possible to transport the stud therein with an easy motion and without any risk of blockage or stuffing, which could damage the system and/or require an unscheduled maintenance. In the holding device, too, the inside diameter of the insertion section is slightly larger than the outside diameter of the flange section. This may result in a stud fed to the holding device coming into an oblique position in the holding direction and first having to be oriented (centered) again with a welding or joining axis before the stud can be transferred into the ready position. In some situations, it may be the case that this centering does not succeed, the result of which is that the fed stud then has to be ejected from the holding device. In the process, the stud falls downward in an uncontrolled manner, either onto the floor or also, for example in automobile construction, into the body. The ejected studs then lie on the floor and are swept up and thrown away. Studs left lying in a body may subsequently lead to disturbing noises during driving.

Document WO2010003478 discloses a holding device for holding studs which have a radially projecting flange section. The holding device comprises a collet component which has a clamping section and a hollow insertion section. A stud can thus be inserted via the insertion section to the clamping section. The clamping section is designed in order to exert a radially inwardly directed clamping force for clamping the stud in place. A securing device, past which a flange section of the stud can be directed is arranged on the insertion section and is designed in such a way that a flange section, which is directed past the securing device, is mounted in a secured manner in a securing position between the securing device and the clamping section. The securing device has at least two securing-sleeve sections which are movable radially relative to one another and which are designed as separate components and together form a securing sleeve.

The installation of the securing device during a change of holding device might be laborious and the position of the stud in the holding device, depending of the kind of studs used, is not always accurate enough to allow the stud to be driven in a ready position.

The object of the present invention is to go some way towards solving or at least mitigating the problems set out above. The invention aims to provide an improved holding device, an improved joining head, an improved joining system and an improved feed method, in which the reliability of the feeding and of the driving of the stud in the holding device is increased.

It is also a goal of the present invention to provide a holding device easy to use and to mount.

To this aim, according to the invention, it is provided a holding device for holding a stud, which comprises a radially projecting flange and a shank, in a securing position, the holding device comprising:
- a collet component including a hollow tubular insertion section defining an insertion axis, and a clamping section, wherein the clamping section comprises a plurality of arms circumferentially distributed, axially extending, radially flexible at a free end, and operable to exert a radially inwardly directed clamping force for clamping the stud;
- a securing device arranged on the insertion section and comprising a securing flange, a bottom end adapted to support the flange of a stud, and a securing sleeve extending between the securing flange and the bottom end, the securing device being located coaxial with and radially inside the insertion section, wherein the securing sleeve comprises a plurality of separate securing-sleeve sections, which are elastically radially movable relative to one another, and
- a clearance space defined between the bottom end and a top end of the clamping section, and the clearance space is operable for releasably holding the flange of the stud in the securing position,
wherein the securing device is a one-part unit and the securing-sleeve sections comprises a shank clamping portion adapted to support the shank of the stud, the shank clamping portion being provided in the vicinity of the bottom end and having a reduced cross section, such that the shank of the stud is hold in an axially centered position.

The securing device is a one-piece part, which allows an easy mounting during a change of holding device before a joining step. In other words, the securing device is easy to install in the collet component of the holding device. Besides, the securing device supports both the flange and the shank of the stud. Thus, the position of the stud is secured and is accurate, allowing less feeding issues. Such holding device and the securing device enable a stud to be pressed through the holding device without high forces.

The expression "secure mounting" of the flange is intended in this case to mean that the stud cannot fall back through the insertion section and/or that the stud is secured against an extreme oblique position inside the holding device.

In an embodiment, the securing sleeve comprises a first portion extending from the securing flange to an intermediate portion, the first portion having a cylindrical shape, wherein the securing-sleeve sections extend from the intermediate portion to the bottom end. The first portion is thus not radially flexible and ensures the rigidity of the securing device.

In an embodiment, each securing-sleeve section comprises a first segment extending parallel to the insertion axis, a second segment extending inwardly toward the insertion axis and a third segment extending parallel to the insertion axis, wherein the second segment is provided between the first and the third segment. Thus the shape of the securing sleeve allows a holding of the shank through the third segment without increasing the force needed by the flange of the stud to be driven through the securing device (and more particularly through the third segments of the securing-sleeve sections).

In an embodiment, the securing device is made of spring steel. The spring steel allows the securing-sleeve sections to elastically move, allowing the passage of the flange without increasing the forces needed.

In an embodiment, the securing device is made of plastic. The weight of the holding device is not (or just slightly) increased by the securing device. The plastic material may allow to reduce the friction between the stud and the securing device.

In an embodiment, the securing device is removably fitted to the collet component. The securing device can thus regularly be changed and be adapted to a particular holding device.

In an embodiment, the securing device comprises a first surface facing the collet component and a second surface adapted to face a stud, and the second surface is coated with lubricant. The coating allows to decrease the friction coefficient between the stud and the securing device without decreasing the support needed to secure the stud in the securing position. Thus, the stud can be shifted through the securing device without increasing the forces needed.

In an embodiment, the securing device comprises a first surface facing the collet component and a second surface adapted to face a stud, and wherein the friction coefficient of the second surface is smaller than the friction coefficient of the first surface. Thus, the stud can be shifted through the securing device without increasing the forces needed.

In an embodiment, the collet component includes a slotted cylindrical front portion forming the clamping section.

In an embodiment, the collet component further includes a plurality of radially elastic support elements distributed around a perimeter of the collet component. When introducing a stud, the support elements are pushed outwards by the flange so that the flange of the stud can pass by the support elements. Afterwards, the support elements move back into their original position. Now, the flange cannot pass by the support elements in an opposite direction any more.

The present invention is further directed to a joining head for joining a stud having a shank and a radially projecting flange to workpieces, the joining head comprising a holding device as described above and a shank-clamping device which can be inserted through the hollow tubular insert section of the collet component and is operable to encompass the shank of the stud in a securing position and to shift the stud from the securing position into a ready position.

The reliability of the feeding of a stud is increased.

Furthermore, the present invention is directed to a method for feeding a stud having a shank and a radially projecting flange to a joining head as described above. The method comprises the step of feeding the stud into the holding device of the joining head until the flange is arranged in front of the clamping section of the holding device. The method further comprises the step of securing the stud in position by the securing device engaging behind the flange and holding the shank of the stud, which securing device has at least two securing-sleeve sections which are movable radially relative to one another.

Finally, the present invention relates to a joining system comprising a joining head as described above and a multi-axis robot having a processing arm, wherein the joining head is secured to the processing arm and a supply unit.

In an embodiment, the joining head is a welding head for welding studs to a workpiece.

Other characteristics and advantages of the invention will readily appear from the following description of embodiments, provided as non-limitative examples, in reference to the accompanying drawings.

In the drawings:
Fig. 1 shows a schematic view of a joining system with a joining head, the joining head comprising a holding device according to the present invention;
Fig. 2 shows a cross-sectional view of a holding device in the joining head of Fig. 1 with a securing device according to the present invention;
Fig. 3 shows the securing device of the holding device of Fig. 2;
Fig. 4a and Fig. 4b show perspective views of the securing device of Fig. 3.
On the different figures, the same reference signs designate identical or similar elements.

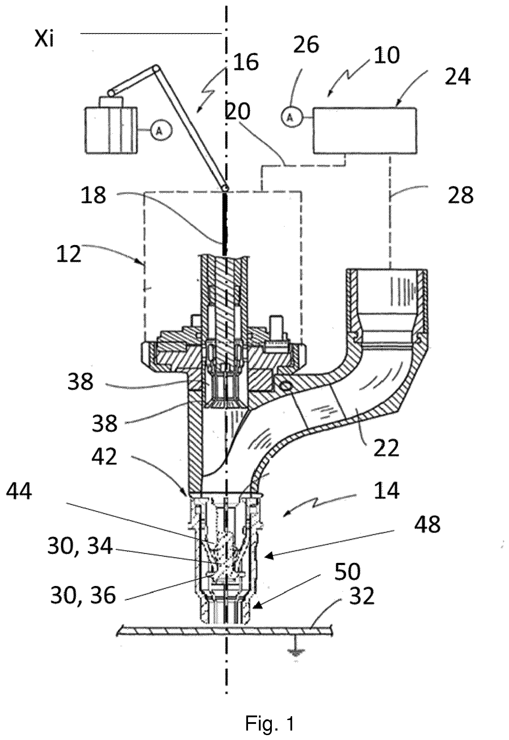

Referring firstly to Fig. 1, there is show a joining system 10 comprising a joining head 12 having a holding device 14. More particularly the joining system 10 illustrated in Fig. 1 is a welding system and comprises a robot 16 which can be a multi-axis robot. The joining head 12 can be a welding head secured to the end of a processing arm 18 of the robot 16. The welding head is for example connected via an electrical supply 20 and via a stud feed hose 22 to a supply unit 24. The supply unit comprises for example power electronics for providing a welding current, which is fed to the welding head. The supply unit 24 may further comprise a control device 26 for controlling the robot 16 and a stud supply from which studs 30 are fed separately to the stud feed hose 22.

The present invention is not limited to welding systems and other joining systems may be considered. For example, the joining system 10 may also be a gluing system used to glue a stud to a workpiece.

The joining head 12 may comprise a feed passage 28 which is connected to the stud feed hose 22. A stud 30 can be delivered to the joining head 12 via the feed passage and the stud feed hose 22. The stud 30 fed to the joining head 12 is to be joined to a workpiece 32, for example a metal sheet, by means of the joining system 10.

As previously mentioned, the joining system 10 may be a welding system and the stud may be welded to the workpiece 32, for example with a drawn arc method. First, the stud 30 is set down on the workpiece 32 by means of the joining head 12. A "pilot current" is then directed through the stud and the workpiece 32. After that, the stud is lifted slightly from the workpiece 32 and an arc is struck. The current is then increased to a welding current and both surfaces of the stud 30 and the workpiece 32 which are opposite to one another are fused or melted. Finally, the stud 30 is lowered onto the workpiece 32 again and the welding current is switched off. The molten surfaces of the stud and the workpiece 32 solidify, such that the stud is finally fixedly connected to the workpiece 32. Such stud welding systems are widely used in the motor vehicle industry.

The stud 30 comprises a shank 34 extending along a longitudinal axis X and a flange 36 which projects radially relative to the shank 34. The shank 34 may comprise a threaded section 40. The flange 36 may have a circular or polygonal shape. The flange 36 comprises a first surface facing the shank 34 and a second surface opposite the first surface. The second surface comprises a joining section adapted to be connected to the workpiece 32. The dimensions of the stud 30 along the longitudinal axis X and/or in a radial direction may vary and for different kind of studs, different holding devices 14 may be mounted in the joining head 12. More particularly, the holding device 14 is screwed to a housing of the joining head 12.

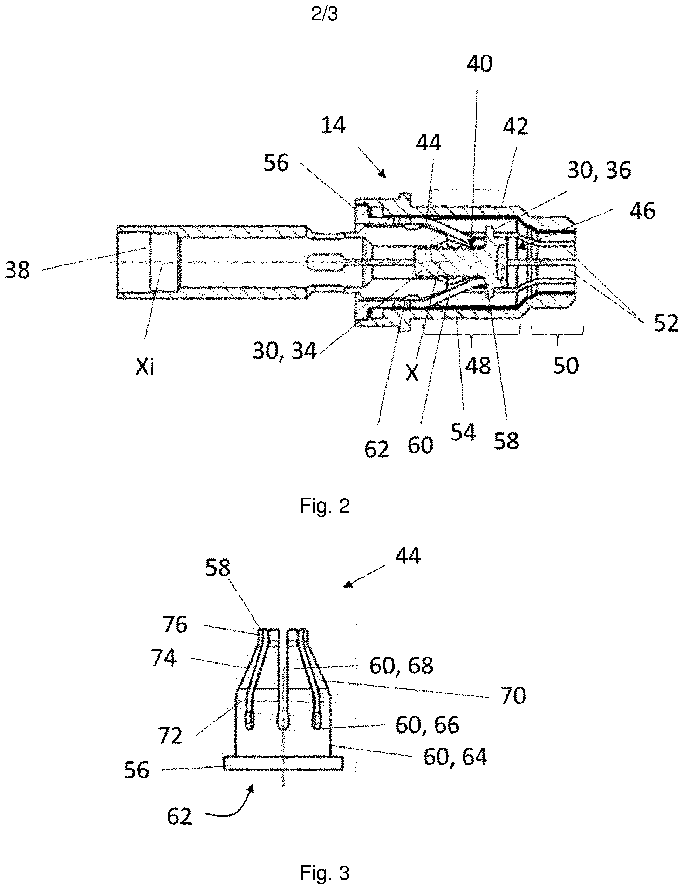

As illustrated in Fig. 1 and Fig. 2, the joining head 12 comprises the holding device 14 and a shank-clamping device 38. The shank-clamping device 38 can be inserted in the holding device 14 and may encompass the shank 34 of a stud 30 in a securing position and/or shift the stud 30 from the securing position into a ready position. In the securing position, the flange 36 should be held in such a secured manner that the stud 30 is already centered in the holding device 14 along or sensibly along a joining axis or an insertion axis Xi. Thus it is sufficient, for example, to press the stud 30 in the axial direction to shift said stud 30 in the ready position. More particularly, in the ready position, the second surface of the flange 36 faces the workpiece 32 and/or is in contact with the workpiece 32 and a joining process can be initiated.

In an alternative embodiment, the securing position can also be the ready position.

In order to secure the stud 30 in the securing position, the holding device 14 is provided with a collet component 42, a securing device 44 and a clearance space 46. The securing device 44 and the collet component 42 are two different parts.

The collet component 42 is provided with a hollow tubular insertion section 48. The hollow tubular insertion section 48 defines the insertion axis Xi. The collet component 42 further comprises a clamping section 50.

As illustrated in Fig. 2, the clamping section 50 is provided with a plurality of arms 52 circumferentially distributed. The arms 52 extend axially and are radially flexible at a free end. The arms 52 are adapted to exert a radially inwardly directed clamping force for clamping the stud, notably in the ready position. In other words, the collet component 42 includes a slotted cylindrical front portion forming the clamping section 50.

The collet component 42 is for example a one-part or one-piece unit.

The insertion section 48 comprises for example an annular portion 54 connected to a feed passage.

The securing device 44 is arranged on the insertion section 48. The securing device 44 is removably fitted in the insertion section 48 and can thus be removed and changed in case of damages. The securing device 44 is located coaxial with and radially inside the insertion section 48.

The dimensions of the securing device 44 are dependent on the dimension of the collet component 42.

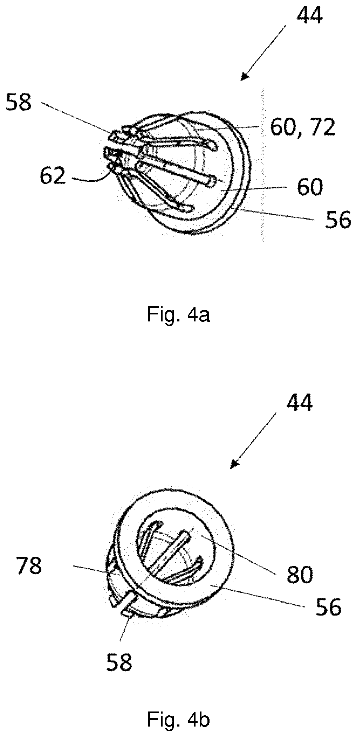

The securing device 44, as better represented in Fig. 3, Fig. 4a and Fig. 4b comprises a securing flange 56, a bottom end 58 and a securing sleeve 60 extending between the bottom end 58 and the securing flange 56.

The securing flange 56 is adapted to rest against a surface of the collet component 42 which can act as an abutment surface. The securing sleeve 60 axially extends from the securing flange 56 and partly defines an insertion opening 62. The insertion opening 62 is adapted to receive the stud 62.

As illustrated, the securing sleeve 60 may comprise a first portion 64 extending from the securing flange 56 to an intermediate portion 66. The first portion 64 may form a cylindrical shell. For instance, as illustrated in Fig. 3, Fig. 4a and Fig. 4b, the intermediate portion 66 comprises a plurality of separate securing-sleeve sections 68. A slot 70 is provided between each securing-sleeve section 68. The securing-sleeve sections 68 are elastically radially movable relative to one another.

Each securing-sleeve section comprises a first segment 72 extending parallel to the insertion axis Xi, a second segment 74 extending inwardly toward the insertion axis Xi and a third segment 76 extending parallel to the insertion axis Xi. The second segment 74 extends between the first and the third segments 72, 76. The securing-sleeve section 68 extends to the bottom end 58 of the securing device 44. An inside diameter of the insertion opening portion formed by the first segments 72 is for example slightly larger than the outside diameter of the flange 36. An inside diameter of the insertion opening portion formed by the third segments 76 is for example slightly smaller than the outside diameter of the shank 34. In an embodiment, the inside diameter of the insertion opening portion formed by the third segments 76 may be equal or slightly larger than the outside diameter of the shank 34.

The bottom end 58 of the securing device 44 is adapted to support the flange 36 of the stud in the securing position whereas the securing-sleeve sections 60 are adapted to support the shank 34 of the stud 30 in the securing position. Thus, both the flange 36 and the shank 34 of the stud are secured by the same component, and the risk of misalignment is reduced.

More particularly, the third segments 76 of the securing-sleeve sections 60 support the shank 34 of the stud 30. The third segments 76 of the securing-sleeve sections may be provided in the vicinity of the bottom end 58 of the securing device. For example, as illustrated, the bottom end 58 defines the free ends of the securing-sleeve sections 60. Thus, the shank of a stud may be supported even if the length of the stud in the longitudinal direction X is short. The third segments 76 form a shank clamping portion.

When introducing a stud 30, the securing-sleeve sections (and more particularly the third segments 76) 60 are pushed outwards by the flange 36 so that the flange 36 of the stud 30 can pass by the securing-sleeve sections 60. Afterwards, the securing-sleeve sections 60 (and more particularly the third segments 76) move back into their original position to support the shank 34 of the stud. The securing-sleeve sections or more particularly the third segments of the securing-sleeve sections thus surround a portion of the shank 34. Eventually the third segments 76 of the securing-sleeve sections surround a threaded section 40 of the shank 34. The third segments 76 of the securing-sleeve sections contact the shank and form a holding or supporting surface. Moreover, the flange 36 is supported by the bottom end and the flange 36 cannot pass by the securing-sleeve sections in an opposite direction any more.

Hence in the securing position the flange 36 extends in the clearance space 46 and is supported by the bottom end 58 and the shank 34 extends in the insertion opening at least partly between the third segments 76 of the securing-sleeve sections. More particularly, the clearance space is provided between the bottom end 58 and a top end of the clamping section 50. The clearance space 46 is operable for releasably holding the flange of the stud in the securing position.

The securing device 44 is a one-piece component and is provided with a funnel shape. Thus, the centering of the stud 30 may be progressive. The longitudinal axis X of the stud 30 does not need to be exactly coincident with the insertion axis Xi and can deviate up to some degrees from the insertion axis Xi in the securing position. For example the angle between the longitudinal axis X of the stud and the insertion axis in the securing position can be between 0 and 10 degrees, preferably between 0 and 5 degrees.

In an embodiment the securing device 44 is a plastic part. In others embodiments the securing device 44 is a spring steel part. Others metal having elastic properties can be considered.

The securing device 44 comprises a first surface 78 facing an internal surface of the collet component and a second surface 80 opposite the first surface. The second surface is adapted to face the stud 30. More particularly the second surface defines the insertion opening of the securing device.

According to an embodiment, the second surface 80 is coated with lubricant. In other embodiments, the second surface 80 may be machined or receive a surface treatment in order to reduce its friction coefficient.

The machined surface and/or the surface coated with lubricant and/or the treated surface allows an easy shift of the stud in the securing position. The presence of the lubricant (or any other treatment) decreases the forces needed by the shank-clamping device 38 to drive the stud in the securing position and/or in the ready position.

## Claims

1. Holding device (14) for holding a stud (30) having a radially projecting flange (36) and a shank (34) in a securing position, comprising:
- a collet component (42) including a hollow tubular insertion section (48) defining an insertion axis (Xi), and a clamping section (50), wherein the clamping section comprises a plurality of arms (52) circumferentially distributed, axially extending, radially flexible at a free end, and operable to exert a radially inwardly directed clamping force for clamping the stud (30);
- a securing device (44) arranged on the insertion section (48) and comprising a securing flange (56), a bottom end (58) adapted to support the flange of a stud (30), and a securing sleeve (60) extending between the securing flange (56) and the bottom end (58), the securing device being located coaxial with and radially inside the insertion section (48), wherein the securing sleeve (60) comprises a plurality of separate securing-sleeve sections, which are elastically radially movable relative to one another, and
- a clearance space (46) defined between the bottom end (58) and a top end of the clamping section (50), and the clearance space is operable for releasably holding the flange of the stud in the securing position,
**characterized in that**
the securing device (44) is a one-part unit and the securing-sleeve sections (68) comprises a shank clamping portion adapted to support the shank of the stud, the shank clamping portion being provided in the vicinity of the bottom end and having a reduced cross section, such that the shank of the stud is hold in an axially centered position.

2. Holding device (14) according to claim 1, wherein the securing sleeve (44) comprises a first portion (64) extending from the securing flange (56) to an intermediate portion, the first portion having a cylindrical shape, wherein the securing-sleeve sections (68) extend from the intermediate portion to the bottom end.

3. Holding device (14) according to claim 1 or 2, wherein each securing-sleeve section comprises a first segment extending parallel to the insertion axis, a second segment extending inwardly toward the insertion axis and a third segment extending parallel to the insertion axis, wherein the second segment is provided between the first and the third segment.

4. Holding device (14) according to any of claims 1 to 3, wherein the securing device (44) is made of spring steel.

5. Holding device (14) according to any of claims 1 to 3, wherein the securing device (44) is made of plastic.

6. Holding device (14) according to any of claims 1 to 5, wherein the securing device (44) is removably fitted to the collet component (42).

7. Holding device (14) according to any of claims 1 to 6, wherein the securing device (44) comprises a first surface (78) facing the collet component (42) and a second surface (80) adapted to face a stud, and wherein the second surface is coated with lubricant.

8. Holding device (14) according to any of claims 1 to 7, wherein the securing device comprises a first surface (78) facing the collet component and a second surface (80) adapted to face a stud, and wherein the friction coefficient of the second surface is smaller than the friction coefficient of the first surface.

9. Joining head (12) for joining a stud having a shank and a radially projecting flange to workpieces (32), the joining head comprising a holding device according to any of claims 1 to 8 and a shank clamping device (38) which can be inserted through the hollow tubular insertion section (48) of the collet component and is operable to encompass the shank of the stud in a securing position and to shift the stud from the securing position into a ready position.

10. Method of feeding a stud (30) having a shank and a radially projecting flange to a joining head according to claim 9, comprising the steps:
a. feeding the stud into the holding device of the joining head until the flange is arranged in front of the clamping section of the holding device,
b. securing the stud in position by the securing device engaging behind the flange section and holding the shank of the stud, which securing device has at least two securing-sleeve sections which are movable radially relative to one another.

11. Joining system (10) comprising a joining head according to claim 9, a multi-axis robot (16) having a processing arm, wherein the joining head is secured to the processing arm and a supply unit.

12. Joining system (10) according to claim 11, wherein the joining head (12) is a welding head.
